# EUROPEAN PATENT SPECIFICATION

(11) **EP 4 585 115 B1**
(45) Date of publication and mention of the grant of the patent: **08.04.2026**
(21) Application number: 24151348.0
(22) Date of filing: 11.01.2024
(51) Int. Cl.: A47J 31/60, A47J 31/06

(54) **CLEANING DEVICE FOR A PORTAFILTER, CLEANING APPARATUS AND METHOD FOR CLEANING A PORTAFILTER**
REINIGUNGSVORRICHTUNG FÜR EINEN FILTER, REINIGUNGSVORRICHTUNG UND VERFAHREN ZUM REINIGEN EINES FILTERS
DISPOSITIF DE NETTOYAGE POUR UN PORTE-FILTRE, APPAREIL DE NETTOYAGE ET PROCÉDÉ DE NETTOYAGE D'UN PORTE-FILTRE

(43) Date of publication of application: 16.07.2025
(73) Proprietor: Protonea Senger, 9000 St. Gallen (CH)
(72) Inventor: Senger, Alexander, 9000 St. Gallen (CH)
(74) Representative: Patentanwälte Bressel und Partner mbB

(56) References cited:
- EP-B1- 3 158 901
- WO-A1-2021/186195

## Description

The invention relates to a cleaning device for a portafilter, a cleaning apparatus and method for cleaning a portafilter.

The preparation of classic espresso coffee involves the extraction of finely ground coffee, compressed in a portafilter into a compact disc, with hot water at a pressure of 9 bar for about 25 seconds. After this, the disc of spent coffee grounds needs to be removed from the portafilter. Here the problem arises that the damp and often soggy material does not easily fall out of the portafilter but needs to be removed in a meticulous manual process. The first step traditionally involves knocking the portafilter against a wooden bar mounted over a waste receptor to eject the majority of the coffee remains which produces an unpleasant and disturbing banging noise and can be straining on the arms and wrists of baristas. In a second tedious step, the portafilter needs to be cleaned out from residues, e.g. with a brush and a towel. In busy cafes this step is often omitted as it is too time-consuming and expensive at the cost of the remaining residues tainting the next espresso to be prepared.

The filter baskets mounted in the portafilter in which the coffee gets extracted come in a wide variety sizes and forms. Typical diameters range from about 40 mm to about 60 mm. They also vary greatly in shape, depending on the amount of coffee to be extracted (single, double or triple dose) and the guiding principle which is thought to govern the extraction process.

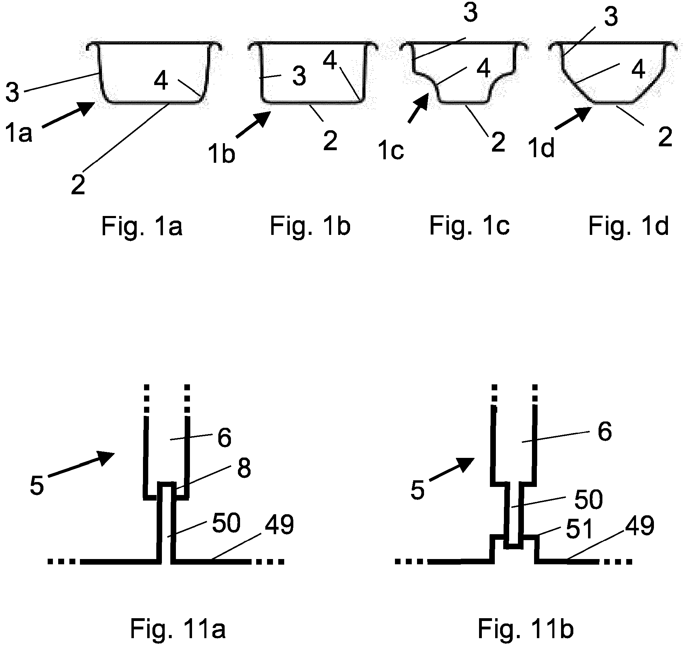

However, in most cases, the cross section of the filter baskets follows one of the two basic shapes depicted in Figures 1a, 1b, 1c, 1d. It is either a straight cup with a flat bottom and straight or slightly slanted walls as shown in Figs. 1a and 1b. Such a shape is usually used as so-called double dose basket. In case of a single dose basket, the basket usually has curved walls or it features a shoulder in the outer bottom region, which reduces the available volume and funnels the hot water into the central section. This shoulder is often formed in the shape of an arc but might also be a straight, tilted section (see Figures 1c, 1d). Here again, the bottom of the filter basket is in almost all cases a straight horizontal screen.

A tool to clean such baskets not only needs to remove the bulk of the spent coffee but furthermore has to remove ideally any last bit and stain to leave a thoroughly cleaned surface to receive the next batch of coffee grounds. It is easy to see that such a tool needs to either have a shape matching the basket to be cleaned exactly or needs to feature great flexibility to reach all parts of any basket.

A further difficulty is that the spent coffee puck can come in a wide range of states.

It can be so soggy as to be almost liquid or it can be hard and brittle, depending on the coffee grounds, age and amount of coffee, preparation and time since the coffee was extracted.

Another important point in the cleaning process is that it has to be quick and easy so that it can be integrated easily into the preparation routine.

Numerous solutions to solve this problem have been proposed in the past. Most revolve around some kind of drilling head which is rotated either by hand, an up and down movement of the portafilter or a small motor. As one example of such a solution, WO2021/186195 A1 discloses cleaning devices, in particular cleaning devices for cleaning portafilters used in coffee machines. A cleaning head is configured to rotate about an axis. A supporting centre of said cleaning head includes a cavity, a bore or a receptacle configured to receive a component such as a rod or a coupler or a drive shaft or a motor shaft. This cavity, bore or receptacle is configured such that a torque is transmitted from the rod, coupler or shaft to the cleaning head.

Other solutions suggest to clean out the coffee remains by washing either with water or air. However, none of these have found widespread acceptance as they are not very practical, fit only a very narrow selection of filter baskets and / or need expensive hardware.

There is therefore the technical problem to provide a cleaning device for a portafilter, a cleaning apparatus and method for cleaning a portafilter which allow an easy, quick and thorough removal of the spent coffee, in particular in a semi-automatic way.

EP 3 158 901 B1 discloses a rotating brush, particularly for the cleaning of coffee machine filters.

Proposed is a cleaning device for a portafilter. The cleaning device which can also be referred to as scraper tool is suitable to clean portafilters with different filter basket shapes, in particular single dose baskets as well as double dose baskets with different geometries.

The cleaning device comprises a support body being rotatable about an axis of rotation. The support body can be made of plastic, in particular of polyamide or polysuflone or any other thermoplastic, in particular a high performance thermoplastics. The support body can be designed as or comprise a rod-shaped body. Said rod-shaped body or sections thereof can have a circular or rectangular cross section. Further, the rod-shaped body or sections thereof can be designed as a hollow body. It is, of course, possible that other geometries of the support body are chosen.

Further, the cleaning device comprises or provides at least one, preferably exactly one, horizontal contact section. The horizontal contact section is used for cleaning a bottom surface of the filter basket of the portafilter. The contact section can be designed as contact point, contact line or contact area. In case of a contact line or contact area, said line/area can be an uncurved or a curved line/area.

In one embodiment, the cleaning device can comprise at least one horizontal arm providing the at least one horizontal contact section and extending from the support body. The horizontal arm can be made of plastic, in particular of polyamide or polysuflone or any other thermoplastic, in particular a high performance thermoplastics. Alternatively, the horizontal contact section can be provided by the support body or an element attached to the support body, e.g. a flexible element or cleaning element which will be explained later.

Alternatively or in addition to the at least one horizontal contact section, the cleaning device comprises at least one, preferably exactly two or at least two vertical contact sections. The vertical contact section is used for cleaning a side wall surface of the filter basket of the portafilter. Again, the contact section can be designed as contact point, contact line or contact area. In case of a contact line or contact area, said line/are can be an uncurved or a curved line/area. The vertical contact sections can be different sections of a contact surface of one contact element. In this case, the contact surface can be a curved surface, e.g. an outer wall surface of contact element, said contact element having, at least partially, a cylindrical or spherical shape. Such a contact surface can have a center point angle in the range of 80° to 120°. It can be applied to the inner wall of the filter basket like a band.

Preferably, however, the vertical contact sections can be sections of different contact elements such as contact arms.

A contact section, in particular a contact element, and the support body can be provided as a one-piece element, in particular as an injection molded element. It is, however, also possible that a contact element is attached to the support body, wherein the contact element and the support body are provided as separate elements.

In one embodiment, the cleaning device can comprise at least one vertical arm providing at least one of said vertical contact sections and extending from the support body. The vertical arms can be made of plastic, in particular of polyamide or polysuflone or any other thermoplastic, in particular a high performance thermoplastics. Alternatively, the vertical contact section can be provided by the support body or an element attached to the support body, e.g. a flexible element or cleaning element which will be explained later. Preferably, the cleaning device comprises at least two, more preferably exactly two, vertical arms, each providing one vertical contact section. The horizontal and/or vertical arms can have a curved or angled shape. It is also possible that only a section of an arm has a curved or angled shape. Then, a remaining section can have an uncurved, i.e. straight, shape.

Preferably, the contact section has an uncurved shape. The contact section can be provided by or at a free end of the arm. A length of the horizontal contact section can be in the range of 5 mm (inclusive) to 20 mm (inclusive) and more preferably in the range of 10 mm (inclusive) to 13 mm (inclusive). Alternatively or in addition, a length of a vertical contact section can be in the range of 5 mm (inclusive) to 35 mm (inclusive) and more preferably in the range of 10 mm (inclusive) to 15 mm (inclusive)
An arm can have at least one section extending in a radial direction with respect to the axis of rotation. Such a section can also be referred to as radial section. Further, an arm can have at least one section extending in an axial direction with respect to the axis of rotation, i.e. a section extending in parallel to said axis of rotation. Such a section can also be referred to as axial section. It is further possible that an arm which has a section which extends parallel to a circumferential direction of a circle around the axis of rotation or parallel to a tangent to such a circle. It is also possible that an arm has at least one mixed direction section which extends in at least two of an axial direction, a radial direction, a circumferential direction, tangent direction. A direction of extension of a section can refer to a direction of a center line of said section which can e.g. be defined by a directional vector. In the cased of a mixed direction, the direction of extension comprises at least two direction components. It is further possible that an arm has at least one transition section by which two sections extending in different directions are connected.

It is possible that the vertical arm has radial section extending from the support body, wherein said radial section transitions to an axial section of the vertical arm. Said axial section can provide the vertical contact section. A free end of such a vertical arm can be provided by this axial section. The horizontal arm can have a mixed direction section extending from the support body, wherein said mixed direction section transitions to a radial section of the horizontal arm. Said radial section can provide the horizontal contact section.

The arms and the support body can be provided as a one-piece element, in particular as an injection molded element. It is, however, also possible that the arms are attached to the support body, wherein the arms and the support body are provided as separate elements.

According to the invention, the cleaning device, in particular the support body, is designed to be rotated around the axis of rotation by a relative movement between a portafilter and said cleaning device. The relative movement can be provided by
- a movement of the portafilter while the cleaning device is stationary, i.e. does not move,
- a movement of the cleaning device while the portafilter is stationary, i.e. does not move,
- a movement of both, the cleaning device and the portafilter.

The relative movement is executed while the portafilter and the cleaning device contact each other. In other words, there is a mechanical contact between the portafilter and the cleaning device during the relative movement.

Further, the relative movement has at least one component oriented perpendicular to said axis of rotation. Preferably, the relative movement or a predominate portion thereof takes place in a plane that is oriented perpendicular to said axis of rotation. This can mean that a component of the relative movement not in the plane is smaller than the component in the plane. In other words, a trajectory of the relative movement can lie in said plane.

In one example, the cleaning device, in particular the support body, can have a rotary bearing section which is configured to rotatably mount the support body on an axle element. The axle element defines the axis of rotation which can be a central or longitudinal axis of the axle element. The axle element can be a cylindrical element. The axle element can be attached to or provided by a handle. The rotary bearing section can be provided by a receiving section of the support body designed for receiving a section of the axle element. The rotary bearing section can feature a bore, a recess, a cavity or the like so that the support body can be mounted onto the axle element to spin around freely. In this case, the rotary bearing section can provide a slide bearing. It is, however, also possible that the rotary bearing section is provided by a rolling bearing or a ball bearing.

In this example, no torque around the axis of rotation can be transmitted via the axle element onto the cleaning device. In particular, a rotary movement of the axle element around the axis of rotation will not lead to a rotational movement of the cleaning device around the axis of rotation. This means that no torque around the axis of rotation can be transmitted via the rotary bearing section.

The axle can be mounted on a retaining element in a torsion-proof manner. Thus, the axle element and the retaining element cannot move relative to each other, in particular around the axis of rotation. The retaining element can e.g. be provided by a container or a handle. This will be explained later.

In a further example, the cleaning device, in particular the support body, can comprise or provide the axle element. The axle element can be attached to the support body, in particular in a torsion-proof manner. Thus, the axle element and the support body cannot move relative to each other, in particular around the axis of rotation. It is possible that the support body and the axle element are provided as a one-piece element. In this example, the axle element is designed to be freely rotatably mountable to a retaining body or element, in particular via a bearing section of said retaining body or element. More particular, the axle element is designed to be mountable to the retaining body in a non-driven manner. This means that in a mounted state, no driving torque for generating a rotary movement around the axis of rotation can be transmitted to the cleaning device via the axle element.

Further described is a cleaning apparatus comprising the cleaning device, the axle element and the retaining element. In the mounted state, the cleaning device is mounted freely rotatable around the axis of rotation by e.g. being mounted freely rotatable around the axle element or by mounting the axle element freely rotatable to the retaining element. Moreover, the axle element can be mounted to the retaining element in a non-driven or non-drivable manner.

In a further example, the cleaning device, in particular the support body and, if applicable, the arms, are configured such that in a cross section plane being perpendicular to the axis of rotation, a circle center of a circle is offset from the axis of rotation, wherein a circle line of said circle runs through the intersection points of the vertical contact sections with the cross section plane. This circle can be referred to as reference circle. It is possible that the cross section plane is chosen such that each vertical contact section has exactly one point of intersection with the cross section plane. If there are multiple points of intersection of each vertical contact section, the circle line can run through the radially outermost point.

In particular, the section plane can be chosen such that the circle line in said section plane runs through the intersection points of a free end of the vertical arms or vertical contact sections which are arranged in the section plane. In other words, a line between a point of the first contact section and a point of the further contact section can provide a secant of the circle in the abovementioned cross section plane. In said cross section plane, the two vertical contact points which make contact to the side wall of the filter basket as well as the point of intersection with the axis of rotation provide edge points of a triangle which is allowed to rotate around the axis of rotation in order to align the side wall.

Such a scraper tool can therefore provide at least one or exactly one, in particular at least or exactly three, contact sections to make contact in a non-elastic way with a filter baskets as depicted in figure 1a, 1b, 1c, 1d below. In case of a scraper tool with at least one or exactly one contact section, this contact section can be provided by a vertical contact section. In this case, the axis of rotation can be arranged outside the receiving volume of the portafilter if the vertical contact section is inserted into the receiving volume of the portafilter. In case of a scraper tool with at least three or exactly three contact sections, these contact sections can be horizontal contact section which contacts the bottom of the basket as well as two vertical contact sections which contact the wall of the receiving volume of the basket.

As a consequence, the scraper tool has a geometric form which fits a large range of filter basket shapes. When brought in contact with the walls and bottom of the filter basket in such a way that the horizontal contact section contacts the bottom of the basket and the vertical contact sections contact the cylindrical wall of the basket, the contact sections can have both, a fixed orientation as well as position relative to said filter basket with one degree of freedom remaining, said degree of freedom being a rotation of the filter basket around the central axis of symmetry of said filter basket. The proposed configuration furthermore offers the advantage that these contact sections can make proper contact with a wide range of different sizes and shapes of filter baskets without being limited by neither the diameter of common filter baskets nor the shape or size of the shoulder in common single-dose filter baskets. This is because two vertical contact sections can be drawn on the wall of a cylinder of any diameter as long as the diameter is larger than the distance between said contact sections. Furthermore, most filter baskets in use today feature a portion of a flat bottom as well as a portion of a cylindrical wall in compliance with the lengths and distances of the contact sections as outlined above.

In case of a point-like contact section, there is another degree of freedom left which is a rotation around an axis parallel to the two points of contact on the wall of the filter basket.

A material of the cleaning device sections which provide the contact sections can be chosen as a rigid material, in particular with a young's modulus in the range of 800 MPA (inclusive) to 4000 MPa inclusive. Although this range is preferable, other ranges or values can alternatively be chosen.

A scraper tool with the proposed configuration, in particular the proposed section(s) to make contact with a filter basket as outlined previously also increases the usability. It is possible to mount the scraper tool on an in particular vertical axis in a way that it can spin freely around said axis, i.e. around the axis of rotation, and to arrange the scraper tool relative to a filter basket such that the axis of rotation is essentially parallel to but a finite distance apart from the central axis of symmetry of the filter basket when the scraper tool is brought in contact with a filter basket with its contact sections. If in such an arrangement (a) the filter basket is moved in a circular motion around the axis of the scraper tool or (b) the scraper tool is moved in a circular motion around the central axis of symmetry, the scraper tool will spin around its axis of rotation if pressed against the bottom and wall of said filter basket during said relative movement.

In practice this can be achieved by mounting the scraper tool in a freely rotatable manner onto a fixed axle element pointing upward, e.g. in a direction oriented against the gravitational force, and then placing the portafilter with the filter basket upside-down onto the scraper tool. Another option is to mount an axle element of the scraper tool in a freely rotatable manner onto a retaining element. This has been explained before.

It is then easy to simultaneously press the portafilter and thus the filter basket onto the scraper tool such that the bottom of the filter basket makes contact with the horizontal contact section of the scraper tool and/or the wall of the filter basket makes contact with the at least one vertical contact section of the scraper tool. If the portafilter is then moved in a circular motion around the axis of rotation of the scraper tool while pressing the filter basket downwards (and towards the axis of the scraper tool), the scraper tool on the inside of the filter basket will make a rotational movement around its axis of rotation in the same direction of rotation as the filter basket while always making contact with the bottom and walls of the filter basket as described above. During this (relative) motion, the vertical contact section(s) move along the walls on a circular path and/or the horizontal contact section moves on the bottom of the basket in a circle, thus scraping off any coffee residues.

For this combined motion to happen easily it has been found that the scraper tool should be designed such that the distance between the axis of rotation of the scraper tool and the central axis of the filter basket in a projection plane being oriented perpendicular to the axis of rotation should be higher than or equal to 5 mm, preferably higher than or equal to 15 mm and more preferably higher than or equal to 20 mm. The scraper tool can also be designed such that its axis of rotation during the relative movement is outside the filter basket.

In summary, the proposed cleaning device allows an easy, quick and thorough removal of the spent coffee, in particular in a semi-automatic way.

In a preferred embodiment, the relative movement is a circular movement around the axis of rotation. In the context of this invention, the term "circular" comprises also slight deviations from an ideal circular movement. A cleaning device, in particular the support body, being designed to be rotated around the axis of rotation by a relative movement between a portafilter and said cleaning device with a circular movement advantageously provides a simple operation for cleaning.

In a further embodiment, the cleaning device, in particular the support body, is designed to be freely rotatable around the axis of rotation. In other words, the cleaning device is designed such that it can spin around the axis of rotation freely. A free rotation can mean that a force/moment resulting from the above relative movement can provide a drive torque transmitted for the rotation around the axis of rotation. In comparison to embodiments in which the cleaning unit is (semi-)actively driven in some form, e.g. by a driving device like a motor, that e.g. amplifies an external rotary impulse acting on the cleaning device, the freely rotatable and only passively rotated cleaning device is much more economical.

In a further embodiment, the cleaning device is designed such that a distance between a longitudinal axis of a reference cylinder being oriented parallel to the axis of rotation and said axis of rotation is larger than three quarters of the radius of the reference cylinder if the cleaning device is positioned such that
i. its axis of rotation is the furthest possible distance apart from the axis of said reference cylinder with at least one vertical contact section touching the inner mantle surface of said reference cylinder,
ii. all contact sections are enveloped by the reference cylinder,
wherein the radius of the reference cylinder is 1.5 times the radius of a minimal enveloping cylinder, the minimal enveloping cylinder being the smallest diameter cylinder enveloping all components of the cleaning device to be inserted into a receiving volume of the portafilter with its longitudinal axis being coaxial to the axis of rotation of the cleaning device.

In this scenario, the reference cylinder and the minimal enveloping cylinder can be considered virtual objects.

The reference cylinder is a cylindrical object with a longitudinal axis being oriented parallel or coaxial to the axis of rotation, wherein the position of the longitudinal axis and the diameter of this cylindrical object are chosen such that at least one vertical contact section touches the inner mantle surface of said reference cylinder and all contact sections are enveloped by the reference cylinder. The latter can mean that all horizontal contact sections and all vertical contact sections are arranged in the inner volume of the reference cylinder.

The minimal enveloping cylinder is a cylindrical object with a longitudinal axis being oriented coaxial to the axis of rotation and with all components of the cleaning device to be inserted into a receiving volume being arranged in this cylindrical object. The diameter of the enveloping cylinder is chosen such that no smaller diameter can be chosen while still all components of the cleaning device to be inserted into a receiving volume are arranged in the inside of the enveloping cylinder. The components to be inserted can also comprise fully or at least in part at least one of: at least one horizontal contact section, at least one vertical contact section, a horizontal arm, a vertical arm, a flexible element, a cleaning element. The latter components will be explained in the following. Components or parts thereof that do not protrude into the inside, i.e. the receiving volume, of the filter basket but beyond it - for example to scrape the edge of the filter basket - are not considered inserted components.

This scenario has a design which allows the axis of rotation to be arranged as far outwards as possible from a filter basket to be cleaned. The further the axis of rotation is pushed outwards, the easier it is to handle the cleaning device.

In a further embodiment, the cleaning device is designed such
- a distance between a longitudinal axis of a reference cylinder being oriented parallel to the axis of rotation and said axis of rotation is larger than half of the radius of the reference cylinder and
- a minimal distance between the axis of the reference cylinder and a point of the cleaning device to be inserted into a receiving volume of the portafilter closest to said axis is less than half the radius of the reference cylinder
   if the cleaning device is positioned such that
   i. its axis of rotation is the furthest possible distance apart from the axis of said reference cylinder with at least one vertical contact section touching the inner mantle surface of said reference cylinder,
   ii. all contact sections are enveloped by the reference cylinder,

   - wherein the radius of the reference cylinder is 1.5 times the radius of a minimal enveloping cylinder, the minimal enveloping cylinder being the smallest cylinder enveloping all components of the cleaning device to be inserted into a receiving volume of the portafilter with its longitudinal axis being coaxial to the axis of rotation.

The reference cylinder and the minimal enveloping cylinder have been explained before. In this embodiment, the minimal distance between the axis of the reference cylinder if it is arranged as outlined before and a point of the cleaning device to be inserted into a receiving volume of the portafilter closest to said axis is less than half the radius of the reference cylinder. The point of the cleaning device closest to the axis of the reference cylinder can be located on a projection portion of the cleaning device, e.g. provided by a horizontal arm (which will be explained later). This design advantageously allows to completely clear the filter basket due to said small distance, in particular since otherwise coffee residue could remain in the middle of the bottom surface of the filter basket.

In a further embodiment, the cleaning device comprises at least one horizontal arm extending from the support body and providing the at least one horizontal contact section. Alternatively or in addition, the cleaning device comprises at least one vertical arm extending from the support body and providing at least one of the vertical contact sections. Preferably, the cleaning device comprises at least two, more preferably exactly two, vertical arms each providing a vertical contact section. Horizontal and vertical arms have been explained before. Having the contact sections provided by arms advantageously allows a light-weight cleaning device having a good cleaning effect since the arms can contact desired sections of the filter basket.

In a further embodiment, an arm extends from the support body radially and axially relative to the axis of rotation. In other words, an arm can have at least one section which extends in at least one of a radial direction, an axial direction, a circumferential direction, a tangent direction, a mixed direction. The horizontal contact section of the at least one horizontal arm can be provided by a radial section and the vertical contact section of each of the vertical arms can be provided by an axial section. This and corresponding advantages have been described before.

In a further embodiment, a vertical arm comprises a radial section extending from the support body, wherein the radial section is followed by or transitions to at least an axial section in the direction of extension. In other words, the axial section can extend from the radial section. Further, the axial section can provide a free end of the vertical arm. Alternatively or in addition, a horizontal arm comprises an axial section extending from the support body, wherein the axial section is followed by at least a radial section in the direction of extension. The radial section can provide a free end of the horizontal arm. This and corresponding advantages have been described before.

In a further embodiment, the horizontal contact section extends in a radial direction and has a length in the range of 5 mm (inclusive) to 20 mm (inclusive), measured along the radial direction, and/or a vertical contact section extends in an axial direction and has a length in the range of 5 mm (inclusive) to 20 mm (inclusive), measured along the axial direction. This and corresponding advantages have been described before.

In a further embodiment, the cleaning device is designed such that in a projection plane which is oriented perpendicular to the axis of rotation, a distance from an outermost free end of the horizontal contact section to a line connecting the vertical contact sections is in the range of 5 mm (inclusive) and 15 mm (inclusive) and preferably in the range of 10 mm (inclusive) and 12 mm (inclusive). The outermost free end can be an end with the maximal distance from the line. If there are multiple points of each contact section in the projection plane, the line can run through the radially outermost points of each contact section. The distance can be measured along a line being parallel to the horizontal contact section.

Alternatively or in addition, a vertical distance between a first plane which is oriented perpendicular to the axis of rotation and in which the horizontal contact section or at least a part thereof is arranged and a second plane which is also oriented perpendicular to the axis of rotation and in which a part of the vertical sections being closest to the first plane are arranged, can be in the range of 8 mm (inclusive) and 20 mm (inclusive) and preferably in the range of 10 mm (inclusive) and 12 mm (inclusive). The distance can be measured along a line being parallel to the axis of rotation.

In a projection plane which is oriented perpendicular to the axis of rotation, a distance between the vertical contact sections, preferably the free or lowest ends of said contact sections, can be in the range of 15 mm (inclusive) and 35 mm (inclusive) and preferably in the range of 18 mm (inclusive) and 14 mm (inclusive). The distance can be measured in a plane being perpendicular to the axis of rotation. If there are multiple points of each vertical contact section in such a plane, the distance can be measured between the radially outermost points of each contact section.

Experiments have shown that each of the described alternatives allows an easy, quick and thorough removal of the spent coffee for a great variety of filter basket shapes and dimensions.

In an alternative embodiment, the cleaning device has a shaft mounting interface for mounting the support body to a driving shaft. The shaft mounting interface can be configured such that operating the driving shaft causes an in particular rotary movement of the cleaning device around a drive axis being different from the axis of rotation.

The shaft can be the rotatable part of a drive device. The drive device can be a motor, in particular an electric motor. The support body can be attached to the shaft in such a way that the aforementioned free rotatability around its axis of rotation is provided. In particular, the drive device and an axle element are not coupled in a manner by which a driving torque provided by the drive device is transmittable to the axle element causes a rotation of the axle element around the axis of rotation.

Preferably, the cleaning device is mounted rotatably on an axle element which extends parallel but is arranged offset with a predetermined distance from the shaft of the drive device. In this case, a shaft mounting interface element can have a first interface for rotatably mounting the support body to the shaft mounting interface element and a further interface for mounting the shaft mounting interface element to the shaft. In this case, the shaft mounting interface element can be mounted to the shaft in a fixed manner. If the shaft is rotated by operating the drive device, the axis of rotation of the support body will execute a circular motion around the shafts axis of rotation with a radius defined by the predetermined offset distance mentioned above. The portafilter can then be pressed onto the cleaning device in a way that its central axis of symmetry is essentially in line with the axis of rotation of the shaft. This way the removal of coffee residues can be motor-assisted, i.e. semi-automated, and thus easier for the user.

The shaft mounting interface can be designed such that the offset distance is adjustable. It is possible that the shaft mounting interface element comprises two parts being movably attached to each other, wherein one of said parts provides the first interface and the further part provides the further interface. This advantageously allows to adapt the configuration to different filter baskets.

In a further embodiment, the cleaning device further comprises at least one flexible element, the flexible element being attached to a fastening section of at least (a) the support body and (b) the horizontal arm and (c) one of the vertical arms and extending from said fastening section(s). At least one section of the flexible element, in particular the section being attached to the fastening section, extends from said fastening section in a radial direction or towards a circle, in particular the aforementioned reference circle or a circle around the axis of rotation. The flexible element or at least a section thereof can provide a horizontal contact section or a vertical contact section.

The flexible element can have a curved shape. In particular, the flexible element can have at least one section extending into at least one of a radial direction, an axial direction, a circumferential direction, a tangent direction or a mixed direction. It is also possible that the flexible element has multiple sections extending into different directions.

The flexible element can be fixed to the fastening section on only one side. In this case, the flexible element has a free end. Alternatively, a first end of the flexible element can be fixed to a first fastening section, wherein a second end of the flexible element is fixed to a further fastening section.

The flexible element can be preferably soft as not to alter the way in which the stiff parts of the scraper tool make contact along the contact section described above. In other words, a stiffness of the flexible element can be lower than the stiffness of the horizontal contact section and/or of the vertical contact section(s). The stiffness can be measured in newtons per meter.

The flexible element can be made of spring steel, polyamide or other plastics, in particular of a material with good mechanical properties in a wide elastic range.

A flexible element can be an element with a directional deformability or stiffness. This can mean that a stiffness with respect to force or stress in a first direction is different from a stiffness with respect to force or stress in at least one other direction being different from the first direction. If the device comprises multiple flexible elements, different flexible elements can have directional deformability or stiffness characteristics which are different from one another.

The flexible element is preferably designed and/or arranged such that it adapts to a wide range of shapes to allow cleaning of the different shapes of filter baskets. In particular, it can be designed and/or arranged to adapt both to the case of a double-dose filter basket with a single edge between a flat bottom and a vertical wall as well as single-dose filter baskets with a more or less pronounced shoulder region.

As a result, such a flexible element can be designed and/or arranged in order to improve the cleaning efficiency for the shoulder region in single-dose filter baskets as well as for the outer bottom and lower walls of double-dose baskets and the inner edges where wall and bottom meet.

In a further embodiment, the stiffness of the flexible element is lower that the stiffness of the horizontal contact section and/or of the vertical contact section(s). This has been explained before and advantageously improves the cleaning efficiency of the cleaning device.

In a further embodiment, the at least one flexible element has an arc shape. A width of the flexible element can be in the range of 1 mm (inclusive) to 5 mm (inclusive). A thickness of the flexible element can be in the range of 0.5 mm (inclusive) to 2 mm (inclusive). A first or lower end of this arc element can be fixed on a first fastening section of at least (a) the support body and (b) the horizontal arm and (c) one of the vertical arms, said fastening section preferably being arranged at the height of the vertical contact section along the axis of rotation. Alternatively or in addition, a second or upper end of the arc can be fixed on a further fastening section of at least (a) the support body and (b) the horizontal arm and (c) one of the vertical arms, said further fastening section being arranged closer to the horizontal contact section as the first fastening section along the axis of rotation.

An arc shape flexible element can comprise a section extending against the radial direction or away from a circle, in particular the aforementioned reference circle or a circle around the axis of rotation, i.e. a section extending radially inwards. This section can be referred to as backfolded section. This backfolded section of the arc element is folded backwards towards the scraper tool, in particular towards the support body or an extension of the support body.

The backfolded section can be a central section of the arc element. It is e.g. possible that two sections which extend radially outwards and which are fastened to different fastening sections are connected by this backfolded section. The arc element with such a backfolded section can be shaped such that an edge of the arc element, in particular an edge of the backfolded section, runs along an area of the filter basket where the side wall and the bottom surface abut or merge into each other, in particular along a lower part of the side wall and an radially outer part of the bottom of a double-dose filter basket. A tip of the arc element (which can be provided by the backfolded section) can be formed and positioned in a way so that it contacts the edge between side wall and the bottom of the double-dose filter basket. Such a contact can in particular be made in a relaxed state of the arc element. This way, all inner surfaces of a double-dose filter basket get scraped and cleaned reliably.

In case the scraper tool with such an arc-shaped flexible element is used with a single-dose filter basket, at least a subsection of the backfolded section can get elastically pushed further into the direction of the interior of the filter basket. The stresses occurring in the arc element during this deformation can be so high as to make the arc conform to the shape of the shoulder of single-dose filter. In other words, the shape of the arc element adapts to the shape of the shoulder region. This way the arc element of the scraper tool scrapes contacts and runs along the surface of the shoulder in the single-dose filter and removes coffee residues situated there in a reliable manner. Such a contact can in particular be made in an unrelaxed state of the arc element.

In a further embodiment, the at least one flexible element has a tongue shape. Such a flexible element can extend from the fastening section and can have a free end. A tongue-shaped flexible element can extend in at least one of a radial direction, an axial direction, a circumferential direction, a tangent direction and a mixed direction. A tongue-shaped element can have a curved shape.

A free end or tip of such a tongue-shaped element can point into an edge formed between the shoulder region in the single-dose filter basket and the side wall or the bottom section of said filter basket respectively. In other words, a free end of the tongue shaped element (or at least a section thereof) can be arranged in between the aforementioned first and second plane, both planes being oriented perpendicular to the axis of rotation.

In a first configuration, a tongue-shaped element can be attached to and extend from the horizontal contact section. Such a tongue-shaped element can also be referred to as upper tongue-shaped element. A first section of said element which is attached to the horizontal section can extend towards a circle, in particular the aforementioned reference circle or a circle around the axis of rotation, e.g. parallel to a radial direction. It is possible that this first section transitions to a second section which can extend parallel to a circumferential direction of the circle or parallel to a tangent to the circle. It is further possible that such a tongue-shaped element does not extend into the axial direction.

In a second configuration, a tongue-shaped element can be attached to and extend from the support body or a section of the horizontal arm being different from the horizontal contact section. Such a tongue-shaped element can also be referred to as lower tongue-shaped element. A first section of said element which is attached to the support body or the horizontal arm can extend towards the circle, e.g. parallel to or in a radial direction and/or in an axial direction. It is possible that this first section transitions to a second section which extends along the axial direction.

Such a tongue-shaped element advantageously allows to further improve the cleaning efficiency. It is in particular configured in such a way the scraper tool can clean out much of the coffee remains on most of the surfaces of most single- and double-dose filter baskets.

In a further embodiment, the cleaning device comprises at least two tongue-shaped flexible elements, wherein a first flexible element is attached to a first fastening section and a second flexible element is attached to a second fastening section, the first and the second fastening section being spaced apart from each other along the axial direction, i.e. along a line being parallel to the axis of rotation.

In particular, the cleaning device can have at least one lower tongue-shaped element as well as one upper tongue-shaped element as described above.

The lower tongue-shaped element can be an element with a directional deformability or stiffness. The lower tongue-shaped element can be configured such that a stiffness with respect to force or stress in an axial direction is lower than a stiffness with respect to force or stress in or parallel to a radial direction. In other words, such an element deforms easily in a direction pointing along the axis of rotation but is stiffer with respect to a radial motion. The tip of such a lower tongue-shaped element can point into the edge formed by the shoulder of a single-dose filter basket and its side wall. The described directional deformability/stiffness advantageously allows a reliably cleaning of filter baskets with different side wall heights, i.e. heights of the shoulder region along the axial direction.

The upper tongue-shaped element can also be an element with a directional deformability or stiffness. This directional deformability of stiffness can be different from the directional deformability or stiffness of the lower tongue-shaped element. The upper tongue-shaped element can be configured such that a stiffness with respect to force or stress in an axial direction is higher than a stiffness with respect to force or stress in or parallel to a radial direction. In other words, such an element can deform easily in a direction pointing radially towards the central symmetry line of the filter basket but is stiffer with respect to an up- and down motion. The tip of such an upper tongue-shaped element can point into the edge formed by the shoulder of a single-dose filter basket and its bottom surface. The described directional deformability/stiffness advantageously allows a reliably cleaning of filter baskets with different bottom surface radii.

A cleaning device having a lower and an upper tongue-shaped element advantageously allows to clean the two inner edges formed inside a single-dose filter basket, wherein a tip of the corresponding tongue-shaped element points into the respective edge-region when the scraper tool makes contact with the inside of the filter basket. During the circular motion of the portafilter around the axis of the scraper tool as described above, the tip(s) of the tongue-like element(s) can clean out the edge regions of the filter basket which further improves the cleaning efficiency.

In a further embodiment, the support body comprises at least one cleaning element being attached to the support body. Preferably, the support body has attachment means for attaching the soft cleaning element to the support body. The young's modulus of the soft cleaning element can be lower than the young's modulus of the support body. In other words, the soft cleaning element can be less stiff than the support body. The soft cleaning element can provide at least the horizontal contact section. Alternatively or in addition, the soft cleaning element can provide at least one of the vertical contact sections.

The attachment means can allow a detachable fastening of the soft cleaning element to the support body. The connection being established by the attachment means can be a form-fit or a force-fit connection. In one example, the support body has a receiving section for the at least one soft cleaning element. As an example, the receiving section can be provided by a trough-like cavity into which the soft cleaning element can be inserted. Thus, the cleaning element can be an exchange element.

The rotary bearing section of the support body can be arranged in such a way that when the support body is mounted onto an axle and the portafilter is pressed onto the cleaning element mounted to the support body, the axis of the axle and the central symmetry axis of the filter basket in the portafilter are parallel but offset in a way as described above. This way the cleaning element can be spun around inside the filter basket in the same ways as described before.

It is further possible that at least one addition wing element is attached to the support body or provided by the support body. Said wing element can increase the area of contact between the cleaning device and the wall of a filter basket in order to stabilize the relative orientation between cleaning device and filter basket during the relative movement and/or in order to provide a vertical or horizontal contact section. This can lead to improved cleaning results.

This soft cleaning element can be made from a material which is able to adapt to the various shapes of filter baskets. Suitable materials for this purpose can be bristles or rubber. Preferably, the soft portion is made from foam (e.g. made from polyethylene, polyurethane, cellulose or other materials). Foam has the additional advantage of absorbing moisture so that the filter basket can be dry and clean after the process.

Such a cleaning element advantageously allows to remove also residuals in case the extracted coffee puck is soggy or wet as such a wet or soggy coffee tends to stick to the filter basket and leaves behind some traces in case of conventional cleaning.

To also remove these traces efficiently it is beneficial to have a second cleaning head which can feature a soft and elastic portion.

In a further embodiment, the cleaning device has a handle. The handle is designed such that a user can operate the cleaning device by hand. The handle can be made of wood, metal or plastics, glass or ceramic. An axle element can be attached to the handle or be provided by the handle. The support body can rotatably attached to the handle, in particular to the axle element. The handle and/or the support body can have bearing means for allowing the rotatable attachment. Exemplary bearing means have been explained before. In one embodiment, the handle can have a mounting pin or rod providing an axle element which can be inserted into a corresponding receiving section of the support body. In this case, the support body is mounted to the handle by a slide bearing. It is, of course, possible to use other kinds of bearings such as rolling bearing to mount the support body to the handle. Alternatively, the axle element fixed to the cleaning device can be rotatably attached to the handle, in particular via a rotary bearing section.

This way the portafilter can be held in one hand while the handle with the cleaning device is held in the other hand. The cleaning device is then pressed into the portafilter so that the contact sections are pressed towards the wall and bottom of the filter basket respectively as described before. The handle can then be guided in a rotational movement around the central axis of symmetry of the filter basket. As a consequence, the cleaning device is guided along the wall of the filter basket in a circular motion, scraping off the coffee residuals.

Further proposed is a cleaning apparatus for a portafilter, the cleaning apparatus comprising a container and at least one cleaning device according to one of the embodiments described in this disclosure. The support body is rotatably mounted to the container. The container can have a bottom side and side walls enclosing a receiving volume for the extracted coffee puck. The container can have a rim formed to be held by hand conveniently. This container can also have a lid to cover the cleaning device and/or any coffee residues when not in use.

The support body can be rotatably mounted to the bottom side or to the side walls. Further, the cleaning device can be mounted to the container such that the cleaning device is at least partially arranged in the receiving volume or above the receiving volume, in particular such that a coffee puck extracted by the cleaning device can fall into the receiving volume.

It is possible that at least one axle element is fixedly mounted to and protrudes from the bottom side of the container, wherein the cleaning device, in particular the support body, is mounted rotatably to the axle element. Alternatively, an axle element being fixedly mounted to the cleaning device can be mounted rotatably to the container, in particular a rotary bearing section of the container. Such a bearing section can be arranged at the bottom side. Such a cleaning apparatus advantageously allows to reliably clean the filter basket while also avoiding an unwanted pollution of the environment by coffee residues. This increases the ease of use.

In one example, the cleaning apparatus comprises two cleaning devices which are both mounted to the container, in particular to the bottom side. The two cleaning devices can be designed differently. In particular, the first cleaning device can be a cleaning device without the aforementioned cleaning element, wherein the second cleaning device can be a cleaning device with the aforementioned cleaning element. In other words, a first cleaning device can provide a rigid horizontal contact section, wherein the second cleaning device provides a soft, i.e. less rigid, horizontal contact section. It is possible that at two axle elements are mounted to and protrude from the bottom side, wherein the support body of the first cleaning device is mounted rotatably to a first axle element and the support body of the second cleaning device is mounted rotatably to a second axle element. As outlined before, it is also possible to mount axle elements being fixedly mounted to the cleaning devices rotatably to the container. In particular in a mounted state, the axle elements can be arranged at a predetermined distance from each other, e.g. a distance of 80 mm (inclusive) to 120 mm (inclusive), preferably 100 mm. The distance can be measured in a direction parallel to the bottom side.

Cleaning of the filter basket in a portafilter with such a cleaning apparatus can comprise using the first cleaning device to remove the bulk of coffee residues as described above in a first step. If necessary, the second cleaning device can be used in a second step to remove any residues which might have been left behind in the first step. This apparatus allows for convenient cleaning as it is easy to hold the container with one hand and the portafilter upside-down with the other hand. In the first step, the portafilter is pressed onto the first cleaning device and spun around to remove most of the spent coffee material. This configuration offers the additional benefit of collecting the coffee remains in the container.

If necessary, the portafilter can then be pressed onto the elastic portion, e.g. a cleaning element, of the second cleaning device and be spun around to remove any residues left behind in the first step. After these steps the portafilter is cleaned and ready for preparation of another coffee. This advantageously allows a very reliable cleaning as a user can apply different cleaning devices in order to clean the filter basket.

The apparatus can also comprise a drive device as described above.

Further proposed is a method for cleaning a portafilter using at least one cleaning device according to one of the embodiments described in this disclosure. Within this method, the cleaning device is positioned in the receiving volume of a filter basket of the portafilter such that the horizontal section contacts a bottom surface of the receiving volume and/or the at least one vertical section contacts a side wall of the receiving volume, wherein the cleaning device and the portafilter are moved relative to one another such that the horizontal section moves along the bottom surface and/or the at least one vertical section moves along the side wall. This advantageously allows a fast and efficient cleaning.

The invention will be described with reference to the following figures showing:
- Fig. 1a: a schematic cross section through a double dose filter basket according to the state of the art,
- Fig. 1b: a schematic cross section through a double dose filter basket according to the state of the art,
- Fig. 1c: a schematic cross section through a single dose filter basket according to the state of the art,
- Fig. 1d: a schematic cross section through a single dose filter basket according to the state of the art,
- Fig. 2: a perspective view of a cleaning device according to the invention,
- Fig. 3: a perspective view of the cleaning device in Fig. 2 being inserted into a single dose filter basket,
- Fig. 4a: a schematic view of a cleaning device in a filter basket in a first relative motion state,
- Fig. 4b: a schematic view of a cleaning device in a filter basket in a second relative motion state,
- Fig. 4c: a schematic view of a cleaning device in a filter basket in a third relative motion state,
- Fig. 5a: a schematic view of a cleaning device in a filter basket in a first relative motion state,
- Fig. 5b: a schematic view of a cleaning device in a filter basket in a second relative motion state,
- Fig. 5c: a schematic view of a cleaning device in a filter basket in a third relative motion state,
- Fig. 6: a perspective view of a cleaning device according to another embodiment of the invention,
- Fig. 7: a perspective view a cleaning device according to another example,
- Fig. 8a: a perspective view of an arc-shaped flexible element of a cleaning device,
- Fig. 8b: a perspective view of an arc-shaped flexible element of a cleaning device,
- Fig. 9: a perspective view a cleaning device according to another embodiment of the invention,
- Fig. 10: a perspective view a cleaning apparatus according to an example,
- Fig. 11a: a schematic side view of a cleaning device according to a further example,
- Fig. 11b: a schematic side view of a cleaning device according to a further example,
- Fig. 12a: a schematic perspective view of a portafilter and a cleaning device outside the portafilter,
- Fig. 12b: a schematic perspective view of a portafilter and a cleaning device being inserted into the portafilter,
- Fig. 13: a schematic bottom view of a cleaning device.

In the following, the same reference numerals denote the same or similar technical features or elements.

The figures 1a to 1d show schematic cross sections different types of filter baskets 1 according to the state of the art.

Fig. 1a shows a schematic cross section through a double dose filter basket 1a having a bottom part with a bottom surface 2 and a side wall 3. The bottom surface 2 and the side wall 3 enclose a volume for receiving ground coffee. The transition between the bottom surface 2 and the side wall 3 is provided by a curved edge section 4. Also shown is that the side wall 3 is slanted with respect to the bottom surface 2 which means that an angle between bottom surface 2 and side wall 3 is slightly larger than 90°. Fig. 1b shows a schematic cross section through another double dose filter basket 1b also having a bottom part with a bottom surface 2 and a side wall 3. The transition between the bottom surface 2 and the side wall 3 is provided by an angled edge section 4. The side wall 3 is straight with respect to the bottom surface 2 which means that an angle between bottom surface 2 and side wall 3 is 90°

Fig. 1c shows a schematic cross section through a single dose filter basket 1c also having a bottom part with a bottom surface 2 and a side wall 3. In addition to the side wall 3 and the bottom surface 2, the filter basket 1c has a rounded shoulder section 4 by which the side wall 3 and the bottom surface 3 are connected. Fig. 1d shows a schematic cross section through a single dose filter basket 1d also having a bottom part with a bottom surface 2 and a side wall 3. In addition to the side wall 3 and the bottom surface 2, the filter basket 1c has a slanted shoulder section 4 by which the side wall 3 and the bottom surface 3 are connected.

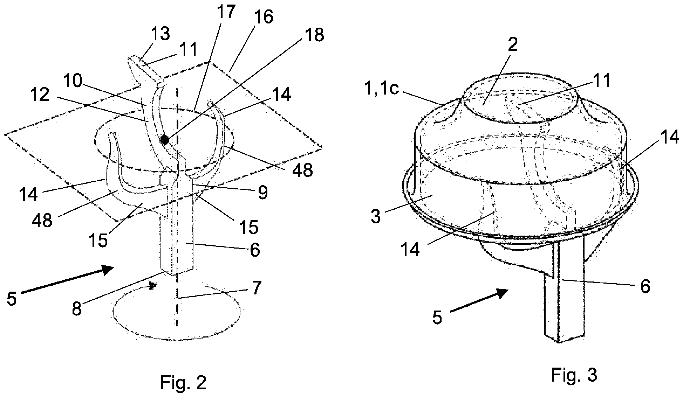

Fig. 2 shows a perspective view of a cleaning device 5 according to the invention. The cleaning device 1 has a support body 6. Said support body 6 is rotatable about an axis of rotation 7. For this, the support body 6 has a bearing section 8 which is arranged at a first end of the support body 6. The first end can also be referred to as lower end of the support body 6. The bearing section 6 is formed by a hollow section of the support body 6 which is configured to receive an external bearing element like a cylindrical rod. If such an external bearing element is inserted into the hollow section (receiving section), the support body 6 can rotate around the axis of rotation 7. Further, the support body 6 has a support section 9 into which the bearing section 8 transitions along the axis of rotation 7.

An arrow indicates an orientation of the axis of rotation 7 which is oriented from the lower end of the support body 6 to an upper end of the support body 6. Directional terms such as "up","upwards", "down", "downwards" used in the following refer to this orientation of the axis of rotation 7.

The cleaning device 5 has one horizontal arm 10 which extends from an upper end of the support section 9. This horizontal arm 10 has a horizontal contact section 11. The horizontal contact section 11 is provided at an upper and free end of the horizontal arm 10. The horizontal contact section 11 has an uncurved upper surface 13 for contacting the bottom surface 2 of a filter basket 1 (see figures 1a to 1d) and extends along a radial direction. The horizontal arm 10 has a curved connecting section 12 by which the support body 6, in particular the upper end of the support section 9, and the horizontal contact section 11 are connected. This connecting section 12 has the form of a quarter circle and a rectangular cross section. The connecting section 12 transitions into the horizontal contact section 10, in particular into a center portion of the contact section 10. The curved connecting section 12 extends in a radial direction with respect to the axis of rotation 7 as well as upwards, i.e. along an axial direction, with respect to the aforementioned direction of the axis of rotation 7.

Further, the cleaning device 5 has two vertical arms 48 each providing a vertical contact section 14 and extending from the support body 6. The vertical arms 48 extend from opposite side walls of the support body 6, in particular from opposite side walls from the support section 9 which has an essentially cuboid shape. The vertical contact sections 14 are provided at a radial outer end of the vertical arms 48. The vertical contact sections 14 are used to contact the side wall 3 of a filter basket 1. Each vertical arm 48 has an essentially uncurved connecting section 15 by which the support body 6, in particular a side wall of the support section 9, and the vertical contact section 14 are connected. The connecting section 15 transitions into the vertical contact section 14. While the connecting section 15 extends in a radial direction with respect to the axis of rotation 7, the vertical contact section 14 extends upwards with respect to the aforementioned direction of the axis of rotation 7. At a free upper end of the vertical contact sections 14, a curved end section is provided. In other words, a free end of the vertical contact sections 14 is kinked.

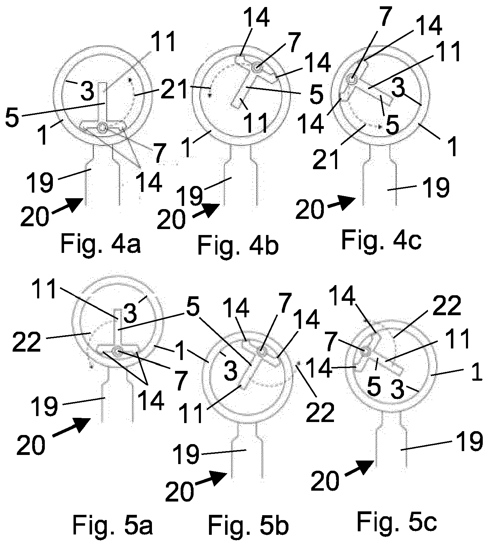

The cleaning device 5, in particular the support body 6, is designed to be rotated around the axis of rotation 7 by a relative movement between a portafilter 20 (see e.g. Fig. 4a) and said cleaning device 5 while the portafilter 20 and the cleaning device 5 contact each other. The relative movement has at least one component oriented perpendicular to said axis of rotation 7. The cleaning device 5, in particular the support body 6, is designed to be freely rotatable around the axis of rotation 7.

Further indicated is a cross section plane 16 which is oriented perpendicular to the axis of rotation 7 and a reference circle 17, wherein the circle line of said reference circle 17 runs through the intersection points of the vertical contact sections 14 with the cross section plane 16. A circle center 18 of said reference circle 17 is offset from the axis of rotation 7.

The arms 10, 48 are made of a rigid plastic such as polyamide, POM, polysulfone or other thermoplastics, in particular performance thermoplastics.

Fig. 3 shows a perspective view of the cleaning device 5 in Fig. 2 being inserted into a single dose filter basket 1. It can be seen that the cleaning device 5 provides three contact sections 11, 14 to make contact in a non-elastic way with the filter basket 1. The horizontal contact section 11 contacts the bottom surface 2 of the basket 1. The two vertical contact sections 14 contact the side wall 3 of the basket 1. In the configuration shown in Fig. 3, the basket 1 and the cleaning device 5 can be moved in a rotational movement relative to each other such that the axis of rotation 7 of the cleaning device 5 is moved around the central axis of symmetry of the filter basket 1. Within this relative rotational movement, it is possible to only move the filter basket 1 while the axis of rotation 7 is kept stationary. Alternatively, it is possible to only move the cleaning device 5 while the filter basket 1 is kept stationary. As a third option, both, the cleaning device 5 as well as the filter basket 1, can be moved. During this relative rotational movement, the cleaning device 5 will spin around its axis of rotation 7 if pressed against the bottom surface 2 and side wall 3 of said filter basket 1. This allows to wipe off the spent coffee from the bottom surface 2 as well as the side wall 3.

Figures 4a, 4b and 4c visualize a first relative movement of the cleaning device 5 and the filter basket 1 in order to perform the cleaning. During this first relative movement, the filter basket 1 is kept stationary.

Fig. 4a shows a schematic view of a cleaning device 5 in a filter basket 1 in a first relative motion state. It is shown that the filter basket 1 is connected to a handle 19 of a portafilter 20 comprising the basket 1 and the handle 19. In the first relative motion state, the vertical contact sections 14 of the vertical arms 48 of the cleaning device 5 make contact with sections of the side wall 3 being adjacent to the handle 19. Starting form the first relative motion state, the cleaning device 5 is moved such that the axis of rotation 7 is moved counterclockwise around a central axis of symmetry of the filter basket 1 into the second relative motion state shown in Fig. 4b. During this movement, the vertical contact sections 14 are pressed against the side wall 3 and the horizontal contact section 11 is pressed against the bottom surface 2 in order to wipe off the spent coffee. An arrow 21 indicates the rotational movement of the axis of rotation 7 of the cleaning device 5. From the second relative motion state, the cleaning device 5 is further moved to the third relative motion state shown in Fig. 4c and further to the first relative motion state in a similar manner. Again, an arrow 21 indicates the rotational movement of the axis of rotation 7 of the cleaning device 5. During this further relative movement, the cleaning device 5 will spin around its axis of rotation 7.

Figures 5a, 5b and 5c visualize a further relative movement of the cleaning device 5 and the filter basket 1 in order to perform the cleaning. During this further relative movement, the axis of rotation 7 of the cleaning device 5 is kept stationary.

Fig. 5a shows a schematic view of a cleaning device 5 in a filter basket 1 in a first relative motion state. As in Fig. 4a, the vertical contact sections 14 of the vertical arms 48 of the cleaning device 5 make contact with sections of the side wall 3 being adjacent to the handle 19 in this first relative motion state. Starting from the first relative motion state, the portafilter 20 and in particular the filter basket 1 is moved such that the central axis of symmetry is moved around the axis of rotation 7 of the cleaning device 5 into a second relative motion state shown in Fig. 5b. During this movement, the side wall 3 of the filter basket 1 is pressed against the vertical contact sections 14 and the bottom surface 2 is pressed against the horizontal contact section 11 in order to wipe off the spent coffee. An arrow 22 indicates the rotational movement of the central axis of symmetry. From the second relative motion state, the filter basket 1 is further moved to the third relative motion state shown in Fig. 5c and further to the first relative motion state in a similar manner. Again, an arrow 22 indicates the rotational movement of the central axis of symmetry. During this further relative movement, the cleaning device 5 will spin around its axis of rotation 7.

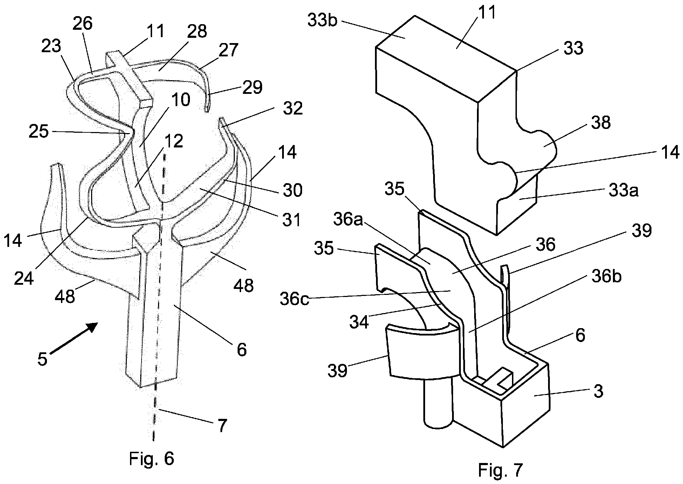

Fig. 6 shows a perspective view a cleaning device 5 according to another embodiment of the invention. In contrast to the embodiment shown in Fig. 2, the cleaning device 5 further comprises an arc-shaped flexible element 23. A first or lower end of the arc-shaped flexible element 23 is attached to the connecting section 12 of the horizontal arm 10, in particular to an end of the connecting section 12 which is attached to the support body 6. A first fastening surface section of the cleaning device 5 to which the first end of arc-shaped flexible element 23 is attached is arranged at the height of the vertical contact section 14. It is oriented radially outward and thus faces the side wall 3 of the filter basket 1 if the cleaning device 5 is arranged in the filter basket 1. A second, upper end of the arc-shaped element 23 is fixed to the horizontal contact section 11 of the horizontal arm 10. A further fastening surface section of the cleaning device 5 is thus arranged closer to the horizontal contact section 11 than the first fastening surface section and is thus closer to the bottom surface 2 of the filter basket 1 if the cleaning device 5 is arranged in the filter basket 1.

The arc-shaped flexible element 23 comprises different section. A first section 24 is attached to the aforementioned first fastening section and extends from said fastening section in a radial direction, i.e. radially outwards. A second section 25 is a backfolded section. A third section 26 is attached to the aforementioned further fastening section and extends from said fastening section also in a radial direction. The backfolded section 25 connects the first and the third section 24, 26 and is folded backwards towards the support body 6. The backfolded section 25, in particular its centre line,of the arc-shaped element 23 extends at least partially radially inwards.

Further, the cleaning device 5 comprises a first, upper tongue-shaped flexible element 27. This upper tongue-shaped element 27 is attached to and extends from the horizontal contact section 11 into a direction which is oriented perpendicular to the direction of extension of the horizontal contact section 11 and parallel to a plane being perpendicular to the axis of rotation 7. This first section 28 of the upper tongue-shaped element 27 transitions to a free end section 29 which can extend parallel to a circumferential direction of the aforementioned circle 17 or a circle around the axis of rotation 7 or parallel to a tangent to said circle 17 or a circle around the axis of rotation 7. It is further possible that such a tongue-shaped element 27 does not extend into the axial direction.

The upper tongue-shaped element 27 is an element with a directional deformability or stiffness and configured such that a stiffness with respect to force or stress in an axial direction is higher than a stiffness with respect to force or stress in or parallel to a radial direction. In other words, such an element deforms easily in a radial motion but is stiffer in a direction pointing up- or downwards. The tip of the shown upper tongue-shaped element 27 points into the edge formed by the shoulder of a single-dose filter basket 1d and its bottom surface 2.

Further, the cleaning device 5 comprises a second, lower tongue-shaped flexible element 30 which is attached to and extends from the horizontal arm 10, in particular to and from an end of the connecting section 12 which is attached to the support body 6. A first section 31 of said lower tongue-shaped element 30 extends radially outwards as well as upwards. It is possible that this first section 31 transitions to a second section 32 which exclusively extends upwards.

The lower tongue-shaped element 30 is an element with a directional deformability and configured such that a stiffness with respect to force or stress in an axial direction is lower than a stiffness with respect to force or stress in or parallel to a radial direction. It therefore deforms easily in an up- and down motion but is stiffer in a direction pointing radially towards the central symmetry line of the filter basket 1. The tip of such a lower tongue-shaped element 30 points into the edge formed by the shoulder section 4 of a single-dose filter basket 1 and its side wall 3.

It can be seen that a fastening section for the upper tongue-shaped element 27 is arranged higher than the fastening section for the lower tongue-shaped element 30 along the axis of rotation 7.

Fig. 7 shows a perspective view a cleaning device 5 according to another example. In contrast to the embodiment shown in Fig. 1, the support body 6 has attachment means for attaching a soft cleaning element 33 to the support body. In particular, the support body 6 provides a receiving section 34 to insert the soft cleaning element 33. The receiving section 34 is enclosed by side walls 35 extending from a bottom surface 36. The bottom surface 36 has an uncurved first surface section 36a which is oriented perpendicular to an axis of rotation 7 of the cleaning device 5. The bottom surface 36 further has a second uncurved surface section 36b which is oriented parallel to the axis of rotation 7 and a curved connecting section 36c which connects the first and second section 36a, 36b. At a lower end of the support body 6, a hollow rectangular profile element 37 is provided.

The cleaning element 33 can have a L-like shape, in particular a first leg 33a and a second leg 33b which extend along directions being perpendicular to each other. The first leg 33a can provide a lower leg of the cleaning element. The cleaning element 33 has a protruding section 38 which protrudes from an outer side wall of said first leg 33a. The protruding section 38 has the shape of a partial cylinder. A free end of the first leg 33a is inserted into the inner volume of the profile element 37 and the remaining leg sections into the receiving section 34 provided between the side walls 35 and the bottom surface 36. Thus, a detachable force- and form-fit connection between the cleaning element 33 and the support body 6 is provided.

The young's modulus of the soft cleaning element 33 is lower than the young modulus of the support body 6. If mounted to the support body 6, the second leg 33b provides a horizontal contact section 11. A section of the first leg 33a which is arranged between the protruding section 38 and the second leg 33b provide a vertical contact section 14. The protruding section 38 of the first leg 33a is designed to provide a volume for receiving an upper edge of the side wall 3 of the filter basket 1 in order to also clean this edge. The remaining section of the first leg is inserted into the hollow rectangular profile element 37 which can be designed with the shape of a trough.

Further shown are guide wings 39 extending from the support body 6. These guide wings 39 are designed as curved blades. When the support body 6 is mounted onto an axle and a filter basket 1 is pressed onto the cleaning element 33 mounted to the support body 6, the axis of the axle and the central symmetry axis of the filter basket 1 in the portafilter are parallel but offset. This way the cleaning element 33 can be spun around inside the filter basket in the same ways as described before.

The guide wings 39 attached to the support body 6 advantageously increase the area of contact between the cleaning device 5 and the wall of the filter basket 1. This way the orientation of the cleaning device 1 with respect to the filter basket 1 can be controlled better which can lead to improved cleaning results. Further, each of the guide wings 39 provides a vertical contact section 14.

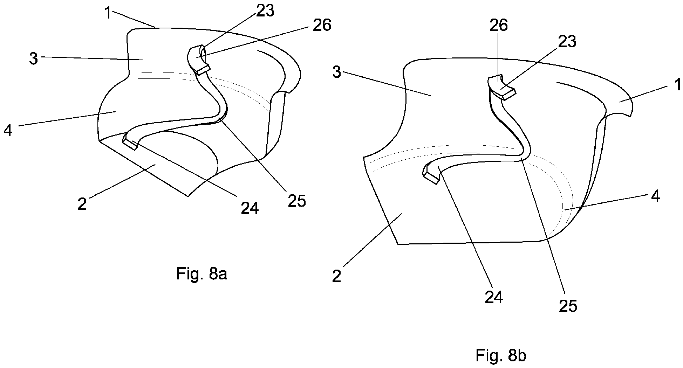

Fig. 8b shows a perspective view of an arc-shaped flexible element 23 of a cleaning device 5 in a double dose filter basket 1. The first section 24 and a subsection of the backfolded section 25 run along the bottom surface 2 of the filter basket 1 while the third section 26 and a further subsection of the backfolded section 25 run along the side wall 3 of the filter basket 1. It can be seen that a further subsection, in particular a center subsection providing the tip of the arc-shaped element 23, runs along an area of the filter basket 1 where the side wall 3 and the bottom surface 2 abut or merge into each other. Thus, the tip of the arc-shaped element 23 which is provided by the backfolded section 25 contacts the edge between side wall 3 and the bottom surface 2 of the double-dose filter basket 1.

Fig. 8a shows a perspective view of an arc-shaped flexible element 23 of a cleaning device 5 in a single dose filter basket 1. In contrast to the configuration shown in Fig. 8a, it is shown that at least a subsection of the backfolded section 25, in particular a subsection comprising the tip, is deformed inwards into the direction of the interior of the filter basket 1. In particular, the arc-shaped element 25 is deformed such that it conforms to the shape of the shoulder section 4 of single dose filter basket 1.

Figures 8a and 8b therefore show that the cleaning device 5 adapts to both, single dose filter baskets 1c, 1d as well as double dose filter baskets 1a, 1b.

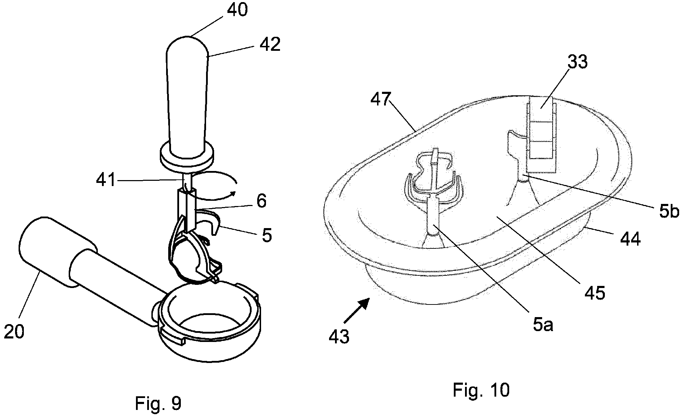

Fig. 9 shows a perspective view a cleaning device 5 according to another embodiment of the invention. The cleaning device 5 comprises a handle 40, wherein a support body 6 of the cleaning device 5 is rotatably attached to the handle 40. The handle 40 can provide an axle element in form of a shaft 41 which extends from a grip part 42 of the handle 40 and is inserted into the bearing section 8 of the support body 6. The support body 6 is rotatably attached to the handle 40.

Fig. 10 shows a perspective view of a cleaning apparatus 43 according to the invention. The cleaning apparatus 43 comprises a container 44 and two cleaning devices 5a, 5b. The support body 6 of each cleaning device 5a, 5b is rotatably mounted to a bottom surface 45 of the container 44 spaced apart from one another. This bottom surface 45 and side walls 46 of the container 44 enclose a receiving volume for the extracted coffee puck. The container 44 further has a rim 47 formed to be held by hand conveniently.

In the embodiment shown in Fig. 10, a first cleaning device 5a is designed like the cleaning device 5 shown in Fig. 6, wherein a second cleaning device 5b is designed like the cleaning device 5 shown in Fig. 7. Both are rotatably mounted to the bottom surface 45. I can be understood from the embodiment shown in Fig. 10 that a coffee puck extracted by the first cleaning device 5a can fall into the receiving volume of the container 44. Further, remaining residues extracted by the second cleaning device 5b can also fall into the receiving volume of the container 44. The cleaning apparatus 43 allows to first use the first cleaning device 5a for a rough cleaning and subsequently the second cleaning device 5b for a fine cleaning of a filter basket 1.

Fig. 11a shows a schematic side view of a cleaning device 5 according to a further example. Shown is a retaining element 49 and an axle element 50 which is attached to the retaining element 49 in a fixed manner. The axle element 50 is a cylindrical element. A first, upper, end of the axle element 50 extends into a rotary bearing section 8 of a support body 6 of the cleaning device 5. A second, lower, end of the axle element 50 is fixedly mounted to the retaining element 49. As a result, the cleaning device 5 is freely rotatably mounted to the axle element 50 and to the retaining element 49.

Fig. 11b shows a schematic side view of a cleaning device 5 according to a further example. Shown is a retaining element 49 and an axle element 50 which is attached to a support body 6 of the cleaning device 5 in a fixed manner. The axle element 50 is again a cylindrical element. A first, upper, end of the axle element 50 is fixedly mounted to the support body 6. A second, lower, end of the axle element 50 extends into a rotary bearing section 51 of the retaining element 49. As a result, the cleaning device 5 is freely rotatably mounted to the retaining element 49.

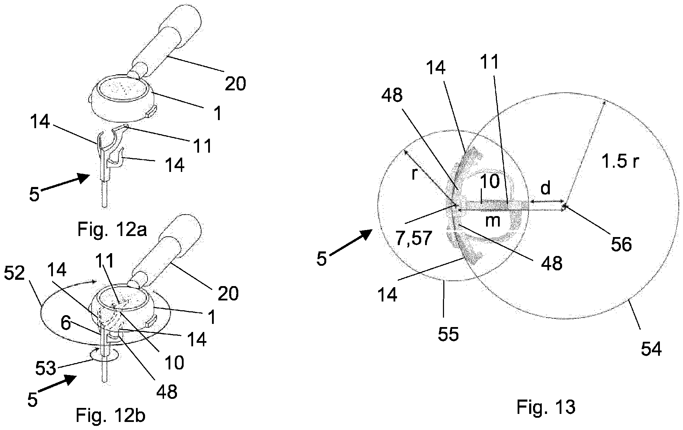

Fig. 12a shows a schematic perspective view of a portafilter 20 with a filter basket 1 and a cleaning device 5 which is arranged outside the portafilter 20. The cleaning device 5 is designed as the embodiment shown in Fig. 2 and therefore, reference is made to the corresponding description. The opening of the receiving volume is oriented downwards so that the cleaning device 5 can be inserted into the receiving volume from below. In particular, the portafilter 20, more particular the filter basket 1, can be placed on top of the cleaning device 5.

Fig. 12b shows a schematic perspective view of the portafilter 20 with the cleaning device 5 being inserted into the receiving volume of the filter basket 1. The components of the cleaning device 5 or parts thereof which are inserted into the receiving volume are indicated by dashed lines and comprise the horizontal contact section 11, the two vertical contact sections 14, a part of the horizontal arm 10 and parts of each vertical arm 48. An arrow 52 indicates a relative movement between the portafilter 20 and the cleaning device 5. The relative movement is illustrated as a circular movement but this is not mandatory. During this relative movement, the cleaning device 5, in particular the horizontal contact section 11 and the vertical contact sections 14 are in contact with inner walls of the filter basket 1 enclosing the receiving volume. A second arrow 53 indicates that the cleaning device 5, namely the support body 6, rotates around the axis of rotation 7 while the relative movement is executed.

Fig. 13 shows a schematic bottom view of a cleaning device 5 as well as a reference cylinder 54 and a minimal enveloping cylinder 55. The reference cylinder 55 has a longitudinal axis 56 which is oriented coaxial to the axis of rotation 7. The position of the longitudinal axis 56 and its diameter are such that at least one vertical contact section 12 touches the inner mantle surface of said reference cylinder 54 and all contact sections, namely the vertical contact sections 14 and the horizontal contact section 11 of the cleaning device 5 are enveloped by the reference cylinder 54.

The minimal enveloping cylinder 55 has a longitudinal axis 57 which is oriented coaxial to the axis of rotation 7. The components of the cleaning device 5 or parts thereof which are inserted into the receiving volume of the basket filter 1, namely the horizontal contact section 11, the two vertical contact sections 14, a part of the horizontal arm 10 and parts of each vertical arm 48 are enveloped by the cylinder 55. The position of the longitudinal axis 57 and the diameter of the enveloping cylinder 55 are chosen such that no position of its longitudinal axis 57 exists in which the diameter can be chosen smaller while still all above mentioned components of the cleaning device 5 to be inserted into a receiving volume are arranged in the inside the enveloping cylinder 55.

Further shown is that the cleaning device 5 is designed such that a distance m between a longitudinal axis 56 of the reference cylinder and the axis of rotation 7 is larger than half of the radius of the reference cylinder 54 and a minimal distance d between the axis 56 of the reference cylinder 54 and a point of the cleaning device 5 to be inserted into a receiving volume of the portafilter 20 (see Fig. 12a) closest to said longitudinal axis 56 is less than half the radius of the reference cylinder 54 if the cleaning device 5 is positioned such that its axis of rotation 7 is the furthest possible distance apart from the axis 56 of said reference cylinder 54.

Further, the radius of the reference cylinder 54 is 1.5 times the radius r of the minimal enveloping cylinder 55.

Visually spoken, the minimal enveloping cylinder 55 is arranged around the cleaning device 5 so that its longitudinal axis 57 lies on the axis of rotation 7 and the cylinder radius r is just large enough so that all parts of the cleaning device 5 that engage the inner surfaces of the filter basket 1 enclosing the receiving volume (without, for example parts that grind on the edge) are included. To create the reference cylinder 54, this radius is multiplied by 1.5 and the resulting cylinder is moved so that its longitudinal axis 56 is still parallel to the axis of rotation 7 but as far apart as possible from said axis 7, with all vertical and horizontal contact surfaces 11, 14 still inside the cylinder and at least one vertical contact surface 14 touching the cylinder surface. In this way, a virtual filter basket is constructed whose diameter depends on the size of the cleaning device 5 or scraper or drill. In this virtual filter basket 1, the scraper is placed against the wall as described above.

## Claims

1. Cleaning device for a portafilter (20), comprising:
- a support body (6) being rotatable about an axis of rotation (7),
- at least one horizontal contact section (11) and/or
- at least one vertical contact section (14),
**characterized in that**
the cleaning device (5), in particular the support body (6), is designed to be rotated around the axis of rotation (7) by a relative movement between the portafilter (20) and said cleaning device (5) while the portafilter (20) and the cleaning device (5) contact each other, the relative movement having at least one component oriented perpendicular to said axis of rotation (7).

2. The cleaning device according to claim 1, **characterized in that** the relative movement is a circular movement around the axis of rotation (7).

3. The cleaning device according to one of the preceding claims, **characterized in that** the cleaning device (5), in particular the support body (6), is designed to be freely rotatable around the axis of rotation (7).

4. The cleaning device according to one of the preceding claims, **characterized in that**
- a distance (m) between a longitudinal axis (56) of a reference cylinder (54) being oriented parallel to the axis of rotation (7) and said axis of rotation (7) is larger than three quarters of the radius of the reference cylinder (54) if the cleaning device (5) is positioned such that
i. its axis of rotation (7) is the furthest possible distance apart from the longitudinal axis (56) of said reference cylinder (54) with at least one vertical contact section (14) touching the inner mantle surface of said reference cylinder (54),
ii. all contact sections (11, 14) are enveloped by the reference cylinder (54),
iii. wherein the radius of the reference cylinder (54) is 1.5 times a radius (r) of a minimal enveloping cylinder (55), the minimal enveloping cylinder (55) being the smallest diameter cylinder enveloping all components of the cleaning device (5) to be inserted into a receiving volume of the portafilter (20) with its longitudinal axis (57) being coaxial to the axis of rotation (7) of the cleaning device (5).

5. The cleaning device according to one of the claims 1 to 3, **characterized in that**
- a distance (m) between a longitudinal axis (55) of a reference cylinder (54) being oriented parallel to the axis of rotation (7) and said axis of rotation (7) is larger than half of the radius of the reference cylinder (54) and
- a minimal distance (d) between the axis of the reference cylinder (54) and a point of the cleaning device (5) to be inserted into a receiving volume of the portafilter (20) closest to said axis is less than half the radius of the reference cylinder (54)
if the cleaning device (5) is positioned such that
i. its axis of rotation (7) is the furthest possible distance apart from the longitudinal axis (56) of said reference cylinder (54) with at least one vertical contact section (14) touching the inner mantle surface of said reference cylinder (54),
ii. all contact sections (11, 14) are enveloped by the reference cylinder (54),
- wherein the radius of the reference cylinder (54) is 1.5 times a radius (r) of a minimal enveloping cylinder (55), the minimal enveloping cylinder (55) being the smallest cylinder enveloping all components of the cleaning device (5) to be inserted into a receiving volume of the portafilter (20) with its longitudinal (57) axis being coaxial to the axis of rotation (7).

6. The cleaning device according to one of the preceding claims, **characterized in that** the cleaning device (5) comprises at least one horizontal arm (10) extending from the support body (6) and providing the at least one horizontal contact section (11) and/or at least one vertical arm (48) extending from the support body (6) and providing at least one of the vertical contact sections (14).

7. Cleaning device according to claim 6, **characterized in that** an arm (10, 48) extends from the support body (6) radially and axially relative to the axis of rotation (7).

8. Cleaning device according to one of the claims 6 or 7, **characterized in that** a vertical arm (48) comprises a radial section extending from the support body (6), wherein the radial section is followed by or transitions to at least an axial section and/or a horizontal arm (10) comprises an axial section extending from the support body (6), wherein the axial is followed by at least a radial section.

9. Cleaning device according to one of the preceding claims, **characterized in that** the horizontal contact section (11) extends in a radial direction and has a length in the range of 5 mm (inclusive) to 35 mm (inclusive) and/or a vertical contact section (14) extends in an axial direction and has a length in the range of 5 mm (inclusive) to 20 mm (inclusive) and/or in a projection plane being perpendicular to the axis of rotation (7), a distance from an outermost free end of the horizontal contact section (11) to a line connecting the vertical contact sections (14) is in the range of 5 mm (inclusive) to 15 mm (inclusive) and/or a vertical distance between a first plane which is oriented perpendicular to the axis of rotation (7) and in which the horizontal contact section (11) or at least a part thereof is arranged and a second plane which is also oriented perpendicular to the axis of rotation (7) and in which a part of the vertical sections (14) being closest to the first plane are arranged is in the range of 8 mm (inclusive) to 20 mm (inclusive) and/or in a projection plane which is oriented perpendicular to the axis of rotation (7), a distance between the vertical contact sections (14) is in the range of 10 mm (inclusive) to 40 mm (inclusive).

10. Cleaning device according to one of the preceding claims, **characterized in that** the cleaning device (5) further comprises at least one flexible element (23, 27, 30), in particular having a tongue shape, the flexible element (23, 27, 30) being attached to a fastening section of at least (a) the support body (6) and (b) the horizontal arm (10) and (c) one of the vertical arms (48) and extending from said fastening section(s).

11. Cleaning device according to claim 10, **characterized in that** the stiffness of the flexible element (23) is lower than the stiffness of the horizontal contact section (11) and/or of the vertical contact section(s) (14) and/or **in that** the flexible element (23) has an arc shape.

12. Cleaning device according to claim 10 or 11, **characterized in that** the cleaning device (5) comprises at least two tongue-shaped flexible elements (27, 30), wherein a first flexible element (27) is attached to a first fastening section and a second flexible element (30) is attached to a second fastening section, the first and the second fastening section being spaced apart from each other along the axial direction.

13. Cleaning device according to one of the preceding claims, **characterized in that** the cleaning device (5) comprises at least one cleaning element (33) being attached to the support body (6) and/or the cleaning device (5) has a handle (40), the support body (6) being rotatably attached to the handle (40) or **in that** the cleaning device (5) has a shaft mounting interface for mounting the support body (6) to a driving shaft.

14. Cleaning apparatus for a portafilter, the cleaning apparatus (43) comprising a container (44) and at least one cleaning device (5) according to one of the claims 1 to 13, wherein a support body (6) is rotatably mounted to the container (44).

15. A method for cleaning a portafilter (20) using at least one cleaning device (5) according to one of the claims 1 to 13, wherein the cleaning device (5) is positioned in a receiving volume of a filter basket (1) of the portafilter (20) such that the horizontal contact section (11) contacts a bottom surface (2) of the receiving volume and/or the at least one vertical contact section (14) contacts a side wall (3) of the receiving volume, wherein the cleaning device (5) and the portafilter (20) are moved relative to one another such that the horizontal contact section (11) moves along the bottom surface (2) and/or the at least one vertical contact section (14) move along the side wall (3).

## Patentansprüche

1. Reinigungsvorrichtung für einen Siebträger (20), umfassend:
- einen Trägerkörper (6), der um eine Rotationsachse (7) drehbar ist,
- mindestens einen horizontalen Kontaktabschnitt (11) und/oder
- mindestens einen vertikalen Kontaktabschnitt (14),
**dadurch gekennzeichnet,**
**dass** die Reinigungsvorrichtung (5), insbesondere der Trägerkörper (6), dazu ausgebildet ist, durch eine Relativbewegung zwischen dem Siebträger (20) und der Reinigungsvorrichtung (5) um die Rotationsachse (7) gedreht zu werden, während der Siebträger (20) und die Reinigungsvorrichtung (5) miteinander in Kontakt stehen, wobei die Relativbewegung mindestens eine Komponente aufweist, die senkrecht zur Rotationsachse (7) ausgerichtet ist.

2. Reinigungsvorrichtung nach Anspruch 1, **dadurch gekennzeichnet,**
**dass** die Relativbewegung eine kreisförmige Bewegung um die Rotationsachse (7) ist.

3. Reinigungsvorrichtung nach einem der vorhergehenden Ansprüche, **dadurch gekennzeichnet, dass** die Reinigungsvorrichtung (5), insbesondere der Trägerkörper (6), frei um die Rotationsachse (7) drehbar ausgebildet ist.

4. Reinigungsvorrichtung nach einem der vorhergehenden Ansprüche, **dadurch gekennzeichnet, dass**
- ein Abstand (m) zwischen einer Längsachse (56) eines Referenzzylinders (54), der parallel zur Rotationsachse (7) ausgerichtet ist, und der Rotationsachse (7) größer ist als drei Viertel des Radius des Referenzzylinders (54),
wenn die Reinigungsvorrichtung (5) so positioniert ist, dass
i. ihre Rotations5)achse (7) den größtmöglichen Abstand von der Längsachse (56) des Referenzzylinders (54) aufweist, wobei mindestens ein vertikaler Kontaktabschnitt (14) die innere Mantelfläche des Referenzzylinders (54) berührt,
ii. alle Kontaktabschnitte (11, 14) vom Referenzzylinder (54) umschlossen sind,
iii. wobei der Radius des Referenzzylinders (54) das 1,5-Fache des Radius (r) eines minimalen Umhüllungszylinders (55) beträgt, wobei der minimale Umhüllungszylinder (55) der kleinste Zylinder ist, der alle in ein Aufnahmevolumen des Siebträgers (20) einzusetzenden Komponenten der Reinigungsvorrichtung (5) umschließt, und dessen Längsachse (57) koaxial zur Rotationsachse (7) ist.

5. Reinigungsvorrichtung nach einem der Ansprüche 1 bis 3, **dadurch gekennzeichnet, dass**
- der Abstand (m) zwischen der Längsachse (56) des Referenzzylinders (54) und der Rotationsachse (7) größer ist als die Hälfte des Radius des Referenzzylinders (54), und
- ein minimaler Abstand (d) zwischen der Achse des Referenzzylinders (54) und einem der Rotationsachse nächstgelegenen Punkt der Reinigungsvorrichtung (5), der in das Aufnahmevolumen des Siebträgers (20) eingesetzt wird, kleiner ist als die Hälfte des Radius des Referenzzylinders (54),
wenn die Reinigungsvorrichtung (5) so positioniert ist, dass
i. ihre Rotationsachse (7) den größtmöglichen Abstand von der Längsachse (56) des Referenzzylinders (54) aufweist, wobei mindestens ein vertikaler Kontaktabschnitt (14) die innere Mantelfläche des Referenzzylinders (54) berührt,
ii. alle Kontaktabschnitte (11, 14) vom Referenzzylinder (54) umschlossen sind,
- wobei der Radius des Referenzzylinders (54) das 1,5-Fache des Radius (r) eines minimalen Umhüllungszylinders (55) beträgt, wobei der minimale Umhüllungszylinder (55) der kleinste Zylinder ist, der alle in ein Aufnahmevolumen des Siebträgers (20) einzusetzenden Komponenten der Reinigungsvorrichtung (5) umschließt, und dessen Längsachse (57) koaxial zur Rotationsachse (7) ist.

6. Reinigungsvorrichtung nach einem der vorhergehenden Ansprüche, **dadurch gekennzeichnet, dass** sie mindestens einen horizontalen Arm (10), der sich aus dem Trägerkörper (6) erstreckt und den mindestens einen horizontalen Kontaktabschnitt (11) bildet, und/oder mindestens einen vertikalen Arm (48), der sich aus dem Trägerkörper (6) erstreckt und der mindestens einen vertikalen Kontaktabschnitt (14) bildet, umfasst.

7. Reinigungsvorrichtung nach Anspruch 6, **dadurch gekennzeichnet,**
**dass** ein Arm (10, 48) sich radial und axial zur Rotationsachse (7) vom Trägerkörper (6) erstreckt.

8. Reinigungsvorrichtung nach Anspruch 6 oder 7, **dadurch gekennzeichnet,**
**dass** ein vertikaler Arm (48) einen radialen Abschnitt, der sich vom Trägerkörper (6) erstreckt, aufweist, an den sich mindestens ein axialer Abschnitt anschließt oder er in diesen übergeht, und/oder dass ein horizontaler Arm (10) einen axialen Abschnitt aufweist, der sich vom Trägerkörper (6) erstreckt, wobei sich an den axialen mindestens ein radialer Abschnitt anschließt.

9. Reinigungsvorrichtung nach einem der vorhergehenden Ansprüche, **dadurch gekennzeichnet, dass**
- der horizontale Kontaktabschnitt (11) sich in radiale Richtung erstreckt und eine Länge von 5 mm (inklusive) bis 35 mm (inklusive) aufweist, und/oder
- ein vertikaler Kontaktabschnitt (14) sich in axiale Richtung erstreckt und eine Länge von 5 mm (inklusive) bis 20 mm (inklusive) aufweist, und/oder
- in einer Projektionsebene senkrecht zur Rotationsachse (7) der Abstand zwischen dem äußersten freien Ende des horizontalen Kontaktabschnitts (11) und einer Verbindungslinie der vertikalen Kontaktabschnitte (14) zwischen 5 mm (inklusive) und 15 mm (inklusive) liegt, und/oder
- der vertikale Abstand zwischen einer ersten Ebene, die senkrecht zur Rotationsachse (7) orientiert ist und in der der horizontale Kontaktabschnitt (11) oder zumindest ein Teil davon zu liegen kommt, und einer zweiten Ebene, die ebenfalls senkrecht zur Rotationsachse (7) orientiert ist und in der sich ein Teil der vertikalen Kontaktabschnitte (14), der am nächsten zur ersten Ebene liegt, befindet, zwischen 8 mm (inklusive) und 20 mm (inklusive) liegt, und/oder
- ein Abstand zwischen den vertikalen Kontaktabschnitten (14) in einer Projektionsebene senkrecht zur Rotationsachse (7) zwischen 10 mm (inklusive) und 40 mm (inklusive) liegt.

10. Reinigungsvorrichtung nach einem der vorhergehenden Ansprüche, **dadurch gekennzeichnet, dass** die Reinigungsvorrichtung (5) mindestens ein flexibles Element (23, 27, 30), insbesondere in Zungenform, umfasst, das an mindestens einem Befestigungsabschnitt (a) des Trägerkörpers (6), (b) des horizontalen Arms (10) und/oder (c) eines vertikalen Arms (48) befestigt ist und sich von dem oder den Befestigungsabschnitt(en) erstreckt.

11. Reinigungsvorrichtung nach Anspruch 10, **dadurch gekennzeichnet,**
**dass** die Steifigkeit des flexiblen Elements (23) geringer ist als die Steifigkeit des horizontalen Kontaktabschnitts (11) und/oder des oder der vertikalen Kontaktabschnitt(e) (14) und/oder dass das flexible Element (23) bogenförmig ausgebildet ist.

12. Reinigungsvorrichtung nach Anspruch 10 oder 11, **dadurch gekennzeichnet,**
**dass** die Reinigungsvorrichtung (5) mindestens zwei zungenförmige flexible Elemente (27, 30) umfasst, wobei ein erstes flexibles Element (27) an einem ersten Befestigungsabschnitt angebracht ist und ein zweites flexibles Element (30) an einem zweiten Befestigungsabschnitt angebracht ist, wobei die Befestigungsabschnitte entlang der axialen Richtung voneinander beabstandet sind.

13. Reinigungsvorrichtung nach einem der vorhergehenden Ansprüche, **dadurch gekennzeichnet, dass** die Reinigungsvorrichtung (5) mindestens ein Reinigungselement (33) aufweist, das am Trägerkörper (6) befestigt ist, und/oder die Reinigungsvorrichtung (5) einen Griff (40) besitzt, wobei der Trägerkörper (6) drehbar am Griff (40) angebracht ist, oder dass die Reinigungsvorrichtung (5) eine Achsschnittstelle zur Befestigung des Trägerkörpers (6) an einer Antriebsachse besitzt.

14. Reinigungsapparat (43) für einen Siebträger, umfassend einen Behälter (44) und mindestens eine Reinigungsvorrichtung (5) nach einem der Ansprüche 1 bis 13, wobei ein Trägerkörper (6) drehbar am Behälter (44) montiert ist.

15. Verfahren zum Reinigen eines Siebträgers (20) unter Verwendung mindestens einer Reinigungsvorrichtung (5) nach einem der Ansprüche 1 bis 13, wobei die Reinigungsvorrichtung (5) in einem Aufnahmevolumen eines Filtersiebs (1) eines Siebträgers (20) so positioniert wird, dass der horizontale Kontaktabschnitt (11) eine Bodenfläche (2) und/oder der mindestens eine vertikale Kontaktabschnitt (14) eine Seitenwand (3) des Aufnahmevolumens berührt, und wobei die Reinigungsvorrichtung (5) und der Siebträger (20) relativ zueinander bewegt werden, sodass der horizontale Kontaktabschnitt (11) entlang der Bodenfläche (2) und/oder der mindestens eine vertikale Kontaktabschnitt (14) entlang der Seitenwand (3) bewegt wird.

## Revendications

1. Dispositif de nettoyage pour un porte-filtre (20), comprenant :
- un corps porteur (6) pouvant tourner autour d'un axe de rotation (7),
- au moins une section de contact horizontale (11) et/ou
- au moins une section de contact verticale (14),
**caractérisé en ce que**
le dispositif de nettoyage (5), en particulier le corps porteur (6), est conçu pour être mis en rotation autour de l'axe de rotation (7) par un mouvement relatif entre le porte-filtre (20) et le dispositif de nettoyage (5), tandis que le porte-filtre (20) et le dispositif de nettoyage (5) sont en contact l'un avec l'autre, le mouvement relatif comportant au moins une composante orientée perpendiculairement audit axe de rotation (7).

2. Dispositif de nettoyage selon la revendication 1, **caractérisé en ce que** le mouvement relatif est un mouvement circulaire autour de l'axe de rotation (7).

3. Dispositif de nettoyage selon l'une quelconque des revendications précédentes, **caractérisé en ce que** le dispositif de nettoyage (5), en particulier le corps porteur (6), est conçu pour être librement rotatif autour de l'axe de rotation (7).

4. Dispositif de nettoyage selon l'une quelconque des revendications précédentes, **caractérisé en ce que**
- une distance (m) entre un axe longitudinal (56) d'un cylindre de référence (54) orienté parallèlement à l'axe de rotation (7) et ledit axe de rotation (7) est supérieure aux trois quarts du rayon du cylindre de référence (54),
lorsque le dispositif de nettoyage (5) est positionné de telle sorte que
i. son axe de rotation (7) est à la distance maximale possible de l'axe longitudinal (56) dudit cylindre de référence (54), au moins une section de contact verticale (14) touchant la surface interne de la paroi dudit cylindre de référence (54),
ii. toutes les sections de contact (11, 14) sont enveloppées par le cylindre de référence (54),
iii. le rayon du cylindre de référence (54) étant égal à 1,5 fois un rayon (r) d'un cylindre enveloppant minimal (55), le cylindre enveloppant minimal (55) étant le cylindre de plus petit diamètre enveloppant tous les composants du dispositif de nettoyage (5) destinés à être insérés dans un volume de réception du porte-filtre (20) dont l'axe longitudinal (57) étant coaxial à l'axe de rotation (7) du dispositif de nettoyage (5).

5. Dispositif de nettoyage selon l'une quelconque des revendications 1 à 3, **caractérisé en ce que**
- une distance (m) entre un axe longitudinal (56) d'un cylindre de référence (54) orienté parallèlement à l'axe de rotation (7) et ledit axe de rotation (7) est supérieure à la moitié du rayon du cylindre de référence (54), et
- une distance minimale (d) entre l'axe du cylindre de référence (54) et un point du dispositif de nettoyage (5) destiné à être inséré dans un volume de réception du porte-filtre (20) le plus proche dudit axe est inférieure à la moitié du rayon du cylindre de référence (54),
lorsque le dispositif de nettoyage (5) est positionné de telle sorte que
i. son axe de rotation (7) est à la distance maximale possible de l'axe longitudinal (56) dudit cylindre de référence (54), au moins une section de contact verticale (14) touchant la surface interne de la paroi dudit cylindre de référence (54),
ii. toutes les sections de contact (11, 14) sont enveloppées par le cylindre de référence (54),
- le rayon du cylindre de référence (54) étant égal à 1,5 fois le rayon (r) d'un cylindre enveloppant minimal (55), le cylindre enveloppant minimal (55) étant le plus petit cylindre enveloppant tous les composants du dispositif de nettoyage (5) destinés à être insérés dans un volume de réception du porte-filtre (20) dont l'axe longitudinal (57) étant coaxial à l'axe de rotation (7).

6. Dispositif de nettoyage selon l'une quelconque des revendications précédentes, **caractérisé en ce qu'**il comprend au moins un bras horizontal (10) s'étendant à partir du corps porteur (6) et fournissant l'au moins une section de contact horizontale (11), et/ou au moins un bras vertical (48) s'étendant à partir du corps porteur (6) et fournissant au moins une des sections de contact verticales (14).

7. Dispositif de nettoyage selon la revendication 6, **caractérisé en ce qu'**un bras (10, 48) s'étend radialement et axialement par rapport à l'axe de rotation (7) à partir du corps porteur (6).

8. Dispositif de nettoyage selon l'une quelconque des revendications 6 ou 7, **caractérisé en ce qu'**un bras vertical (48) comprend une section radiale s'étendant à partir du corps porteur (6), dans lequel la section radiale est suivie par ou se transforme en au moins une section axiale et/ou **en ce qu'**un bras horizontal (10) comprend une section axiale s'étendant à partir du corps porteur (6), dans lequel la section axiale est suivi par au moins une section radiale.

9. Dispositif de nettoyage selon l'une quelconque des revendications précédentes, **caractérisé en ce que** la section de contact horizontale (11) s'étend dans une direction radiale et présente une longueur entre 5 mm (inclus) et 35 mm (inclus) et/ou une section de contact verticale (14) s'étend dans une direction axiale et présente une longueur entre 5 mm (inclus) et 20 mm (inclus), et/ou, dans un plan de projection perpendiculaire à l'axe de rotation (7), une distance entre l'extrémité libre la plus externe de la section de contact horizontale (11) et une ligne reliant les sections de contact verticales (14) est comprise entre 5 mm (inclus) et 15 mm (inclus), et/ou une distance verticale entre un premier plan perpendiculaire à l'axe de rotation (7), dans lequel est disposée la section de contact horizontale (11) ou au moins une partie de celle-ci, et un second plan également perpendiculaire à l'axe de rotation (7), dans lequel est disposée une partie des sections de contact verticales (14) la plus proche du premier plan, est comprise entre 8 mm (inclus) et 20 mm (inclus), et/ou une distance entre les sections de contact verticales (14), dans un plan de projection perpendiculaire à l'axe de rotation (7), est comprise entre 10 mm (inclus) et 40 mm (inclus).

10. Dispositif de nettoyage selon l'une quelconque des revendications précédentes, **caractérisé en ce que** le dispositif de nettoyage (5) comprend en outre au moins un élément flexible (23, 27, 30), notamment en forme de languette, l'élément flexible (23, 27, 30) étant fixé à une section de fixation d'au moins (a) le corps porteur (6) et (b) le bras horizontal (10) et (c) l'un des bras verticaux (48) et s'étendant à partir de ladite ou desdites section(s) de fixation.

11. Dispositif de nettoyage selon la revendication 10, **caractérisé en ce que** la rigidité de l'élément flexible (23) est inférieure à la rigidité de la section de contact horizontale (11) et/ou de la ou des section(-s) de contact verticale(-s) (14), et/ou **en ce que** l'élément flexible (23) est de forme arquée.

12. Dispositif de nettoyage selon la revendication 10 ou 11, **caractérisé en ce que** le dispositif de nettoyage (5) comprend au moins deux éléments flexibles en forme de languette (27, 30), un premier élément flexible (27) étant fixé à une première section de fixation et un second élément flexible (30) étant fixé à une seconde section de fixation, la première et la deuxième section de fixation étant espacées l'une de l'autre dans la direction axiale.

13. Dispositif de nettoyage selon l'une quelconque des revendications précédentes, **caractérisé en ce que** le dispositif de nettoyage (5) comprend au moins un élément de nettoyage (33) fixé au corps porteur (6) et/ou que le dispositif de nettoyage (5) comporte une poignée (40), le corps porteur (6) étant monté de manière rotative à la poignée (40), ou **en ce que** le dispositif de nettoyage (5) comporte une interface de montage d'arbre pour monter le corps porteur (6) sur un arbre d'entraînement.

14. Appareil de nettoyage (43) pour un porte-filtre, l'appareil de nettoyage (43) comprenant un récipient (44) et au moins un dispositif de nettoyage (5) selon l'une quelconque des revendications 1 à 13, un corps porteur (6) étant monté de manière rotative sur le récipient (44).

15. Procédé de nettoyage d'un porte-filtre (20) au moyen d'au moins un dispositif de nettoyage (5) selon l'une quelconque des revendications 1 à 13, dans lequel le dispositif de nettoyage (5) est positionné dans un volume de réception d'un panier-filtre (1) du porte-filtre (20) de sorte que la section de contact horizontale (11) est en contact avec une surface de fond (2) du volume de réception et/ou que l'au moins une section de contact verticale (14) est en contact avec une paroi latérale (3) du volume de réception, dans lequel le dispositif de nettoyage (5) et le porte-filtre (20) sont déplacés l'un par rapport à l'autre de manière que la section de contact horizontale (11) se déplace le long de la surface de fond (2) et/ou que l'au moins une section de contact verticale (14) se déplace le long de la paroi latérale (3).
